# EUROPÄISCHE PATENTSCHRIFT

(11) **EP 3 636 961 B1**
(45) Veröffentlichungstag und Bekanntmachung des Hinweises auf die Patenterteilung: **28.07.2021**
(21) Anmeldenummer: 18465599.1
(22) Anmeldetag: 10.10.2018
(51) Int. Cl.: F16H 25/18, F16K 31/528, F02M 26/52, F16H 25/02

(54) **VERBINDUNGSSTÜCK ZUR ÜBERTRAGUNG EINER ROTATIONSBEWEGUNG IN EINE LINEARBEWEGUNG UND ABGASSTEUERVENTIL EINES KRAFTFAHRZEUGES MIT EINEM SOLCHEN VERBINDUNGSSTÜCK**
CONNECTOR FOR TRANSMITTING A ROTARY MOVEMENT INTO A LINEAR MOVEMENT AND EXHAUST GAS CONTROL VALVE OF A MOTOR VEHICLE WITH SUCH A CONNECTOR
PIÈCE DE RACCORDEMENT DESTINÉE À LA TRANSMISSION D'UN MOUVEMENT ROTATIF DANS UN MOUVEMENT LINÉAIRE ET SOUPAPE DE GAZ D'ÉCHAPPEMENT D'UN VÉHICULE AUTOMOBILE DOTÉ D'UNE TELLE PIÈCE DE RACCORDEMENT

(43) Veröffentlichungstag der Anmeldung: 15.04.2020
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- WO-A1-2015/036332
- WO-A1-2015/036333
- WO-A1-2016/071276

## Beschreibung

Die Erfindung betrifft ein Verbindungsstück zur Übertragung einer Rotationsbewegung in eine Linearbewegung mit einer verschieblich geführten Führungsplatte, mit einer Aufnahme für einen von einer Kurvenscheibe angetriebenen Führungsbolzen und mit einem federnden Abschnitt der Führungsplatte an der Aufnahme. Weiterhin betrifft die Erfindung ein Abgassteuerventil zur Steuerung eines Abgaskanals eines Kraftfahrzeuges mit einem solchen Verbindungsstück, mit einem linear verschieblichen Ventilkörper und mit einem Elektromotor zum Antrieb des Ventilkörpers, wobei das Verbindungsstück zur Übertragung einer Rotationsbewegung des Elektromotors in eine Linearbewegung eines Ventilkörpers ausgebildet ist.

Abgassteuerventile von Kraftfahrzeugen werden in heutigen Kraftfahrzeugen häufig eingesetzt und sind aus der Praxis bekannt. Der Ventilkörper des Abgassteuerventils ist meist tellerförmig gestaltet und längsverschieblich geführt. Das Verbindungsstück überträgt eine Rotationsbewegung eines Aktors auf den Ventilkörper.

Das Verbindungsstück ist im Wesentlichen eben gestaltet und wird mit dem am Ende des federnden Abschnitts angeordneten Führungsbolzen geführt. Der federnde Abschnitt verhindert die unmittelbare Übertragung von in den Ventilkörper eingeleiteten Kräften auf den Elektromotor. Nachteilig bei dem bekannten Verbindungsstück ist, dass bei einem Federn des federnden Abschnitts eine Verdrehung der längsverschieblich geführten Führungsplatte gegenüber dem den Führungsbolzen aufnehmenden Bereich entsteht. Damit gestaltet sich eine Zuordnung der erfolgten Linearbewegung auf die in die Kurvenscheibe eingeleitete Rotationsbewegung nur sehr ungenau. Somit kann der Ventilkörper nur ungenau positioniert werden.

Aus der WO 2016/071276 A1 ist ein Verbindungsstück der eingangs genannten Art bekannt geworden, bei dem zwei als Wälzlager ausgebildete Führungsbolzen auf beiden Seiten einer Führungsrippe angeordnet sind. Die Wälzlager sind gegen die Führungsrippe vorgespannt. Die Führungsrippe hat eine veränderliche Breite, so dass unerwünschte Reaktionskräfte vermieden werden.

Der Erfindung liegt das Problem zugrunde, ein Verbindungsstück der eingangs genannten Art so weiter zu bilden, dass es eine besonders genaue Linearbewegung ermöglicht. Weiterhin soll ein Abgassteuerventil mit einem solchen Verbindungsstück geschaffen werden, welches eine besonders genaue Positionierung des Ventilkörpers ermöglicht.

Das erstgenannte Problem wird erfindungsgemäß dadurch gelöst, dass die Führungsplatte zwei, mit ihren Enden einander zugewandte federnde Abschnitte hat und dass die Aufnahme von den Enden der beiden Abschnitte gehalten ist.

Durch diese Gestaltung ermöglichen die federnden Abschnitte ein Vor- und Zurückfedern der Aufnahme und damit des in der Aufnahme angeordneten Führungsbolzens. Da die Enden der federnden Abschnitte einander zugewandt sind, lässt sich die Einleitung eines Drehmoments in die Führungsplatte vermeiden. Dank der Erfindung ist der Führungsbolzen federnd gegenüber der Kurvenscheibe gehalten und stabil in der Linearbewegung gehalten. Damit ermöglicht das Verbindungsstück eine besonders genaue Linearbewegung.

Die gleichzeitige Halterung der Aufnahme mittels zweier federnder Abschnitte gestaltet sich gemäß einer anderen vorteilhaften Weiterbildung der Erfindung besonders einfach, wenn die Aufnahme mittig auf einem balkenförmigen Teilstück angeordnet ist, und dass die Enden des Teilstücks an den übrigen Bereichen der Führungsplatte angebunden sind. Durch diese Gestaltung sind die beiden federnden Abschnitte zwischen den Anbindungen der Enden an den übrigen Bereichen der Führungsplatte und dem mittigen Anschluss angeordnet. Das Verbindungsstück gestaltet sich hierdurch konstruktiv besonders einfach.

Die federnden Abschnitte vermögen den Führungsbolzen gemäß einer anderen vorteilhaften Weiterbildung der Erfindung zuverlässig zu führen, wenn das Teilstück C-förmig gestaltet ist.

Das zweitgenannte Problem, nämlich die Schaffung eines Abgassteuerventil mit einem solchen Verbindungsstück, welches eine besonders genaue Positionierung des Ventilkörpers ermöglicht, wird erfindungsgemäß dadurch gelöst, dass das Verbindungsstück mit dem Ventilkörper und der Elektromotor zum Antrieb mit der Kurvenscheibe verbunden ist.

Durch diese Gestaltung ermöglichen die beiden federnden Abschnitte eine zuverlässige lineare Bewegung der Führungsplatte und damit des Ventilkörpers. Eine Verdrehung der Führungsplatte bei zwischen dem Ventilkörper und dem Elektromotor auftretenden Kräften, wird Dank der beiden federnden Abschnitte vermieden.

Der Führungsbolzen könnte beispielsweise in eine Nut der Kurvenscheibe eindringen. Dies würde jedoch große Abmessungen der Kurvenscheibe erfordern. Eine hohe Stabilität des Verbindungsstücks bei kleinen Abmessungen lässt sich gemäß einer anderen vorteilhaften Weiterbildung der Erfindung einfach erzeugen, wenn die Kurvenscheibe einen hervorstehenden Rand hat und der Führungsbolzen an dem hervorstehenden Rand abgestützt ist.

Ein Verdrehen der Führungsplatte lässt sich gemäß einer anderen vorteilhaften Weiterbildung der Erfindung einfach vermeiden, wenn die Führungsplatte von dem Führungsbolzen beabstandet eine Führung in der Kurvenscheibe hat. Damit ist die Führungsplatte an der Kurvenscheibe geführt. Eine Führung der Führungsplatte an einem feststehenden Bauteil, wie einem Gehäuse, ist Dank der Erfindung nicht erforderlich.

Zur weiteren Erhöhung der Stabilität des Verbindungsstücks bei sehr kleinen Abmessungen trägt es gemäß einer anderen vorteilhaften Weiterbildung der Erfindung bei, wenn die Führung eine Abwinklung von der Führungsplatte hat und der von der Kurvenscheibe hervorstehende Rand an jeder Stelle im Wesentlichen die gleiche Stärke hat, wobei die Abwinklung an der dem Führungsbolzen abgewandten Seite des Randes geführt ist. Ein weiterer Vorteil der Gestaltung der Führung als Abwinklung besteht darin, dass die Führungsplatte einfach einstückig im Stanzverfahren gefertigt werden kann. Eine nachträgliche Befestigung von Führungsbauteilen ist Dank der Erfindung nicht erforderlich.

Zur weiteren Verringerung möglicher Verdrehungen der Führungsplatte trägt es gemäß einer anderen vorteilhaften Weiterbildung der Erfindung bei, wenn die Führung zwei einander gegenüberstehende Abwinklungen hat und die Abwinklungen mit dem Führungsbolzen in einer Draufsicht auf die Kurvenscheibe ein Dreieck bilden. Vorzugsweise ist das Dreieck im Wesentlichen gleichschenklig.

Die Erfassung der von dem Verbindungsstück übertragenen Linearbewegung gestaltet sich gemäß einer anderen vorteilhaften Weiterbildung der Erfindung besonders einfach, wenn die Führungsplatte einen biegesteifen Abschnitt hat, und wenn ein Sensor zur Erfassung der Linearbewegung an dem biegesteifen Abschnitt angeordnet ist. Vorzugsweise ist auf dem biegesteifen Abschnitt ein Magnet angeordnet, dessen Position von einem feststehenden Sensor erfasst wird.

Die Abwinklung der Führung könnte wie der Führungsbolzen auf dem federnden Abschnitt angeordnet sein. Toleranzen des Antriebs durch die Kurvenscheibe lassen sich jedoch gemäß einer anderen vorteilhaften Weiterbildung der Erfindung einfach ausgleichen, wenn die Abwinklung der Führung auf dem biegesteifen Abschnitt angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch einen vorderen Teilbereich eines Kraftfahrzeuges mit einem Abgassteuerventil,
- Fig.2: vergrößert einen Teilbereich des Abgassteuerventils aus Figur 1 in einer perspektivischen Darstellung,
- Fig.3: stark vergrößert ein Verbindungsstück des Abgassteuerventils aus Figur 2.

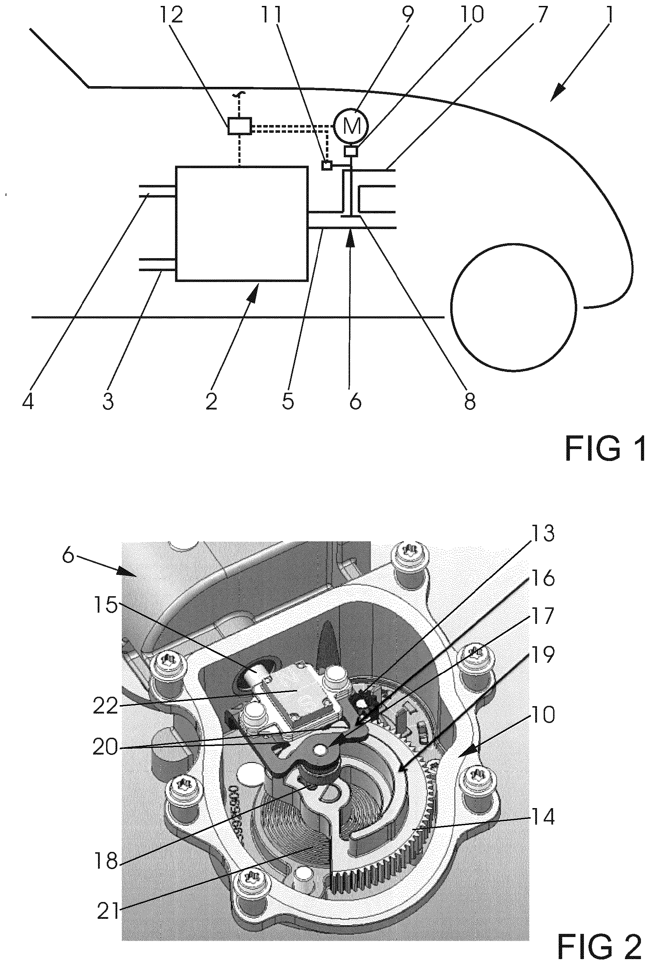

Figur 1 zeigt einen Teilbereich eines Kraftfahrzeuges 1 mit einer eine Antriebsmaschine 2 aufweisenden Antriebseinheit. Die Antriebseinheit hat zwei Zuführkanäle 3, 4 für Brennstoff, beispielsweise gasförmigen Brennstoff, und für Frischluft und einen Abgasstrang 5. Bei der Antriebsmaschine 2 kann es sich beispielsweise um eine Brennstoffzelle oder um eine Brennkraftmaschine handeln. In dem Abgasstrang 5 ist ein Abgassteuerventil 6 zur Steuerung eines Abgaskanals 7 angeordnet. Bei dem Abgaskanal 7 kann es sich beispielsweise um eine so genannte Abgasrückführung oder um einen Bypasskanal handeln.

Das Abgassteuerventil 6 hat einen linear beweglichen Ventilkörper 8, welcher von einem eine Rotationsbewegung ausführenden Elektromotor 9 antreibbar ist. Zwischen dem linear beweglichen Ventilkörper 8 und dem Elektromotor 9 ist ein Getriebe 10 angeordnet. Ein Sensor 11 erfasst die Stellung des Ventilkörpers 8 und leitet die Signale zu einer elektronischen Steuereinheit 12, welche wiederum mit der Antriebseinheit 2 verbunden ist und den Elektromotor 9 ansteuert.

Figur 2 zeigt stark vergrößert einen Teilbereich des Abgassteuerventils 6 im Bereich des Getriebes 10. Das Getriebe 10 hat ein mit dem Elektromotor 9 aus Figur 1 verbundenes Abtriebsritzel 13 zum Antrieb einer Kurvenscheibe 14. Ein Schaft 15 des in Figur 1 dargestellten Ventilkörpers 8 ist in das Getriebe 10 hineingeführt und mit einem Verbindungsstück 16 verbunden. Das Verbindungsstück 16 hat eine Aufnahme 17 für einen Führungsbolzen 18. Der Führungsbolzen 18 ist an einem hervorstehenden Rand 19 der Kurvenscheibe 14 abgestützt. Weiterhin hat das Verbindungsstück 16 zwei Abwinklungen 20, 21, welche auf der dem Führungsbolzen 18 gegenüberliegenden Seite des Randes 19 der Kurvenscheibe 14 geführt sind. Weiterhin hat das Abgassteuerventil 6 eine Rückstellfeder 21 zur Rückstellung der Kurvenscheibe 14 in eine Grundstellung.

Beim Antrieb durch den Elektromotor 9 verdreht das Antriebsritzel 13 die Kurvenscheibe 14. Dabei gleitet der Rand 19 der Kurvenscheibe 14 zwischen Führungsbolzen 18 und Abwinklungen 20 des Verbindungsstücks 16. Das Verbindungsstück 16 entsprechend der Form des Randes 19 führt eine Linearbewegung aus und überträgt diese über den Schaft 15 auf den in Figur 1 dargestellten Ventilkörper 8. Auf dem Verbindungsstück 16 ist ein Magnet 22 des in Figur 1 dargestellten Sensors 11 verschraubt.

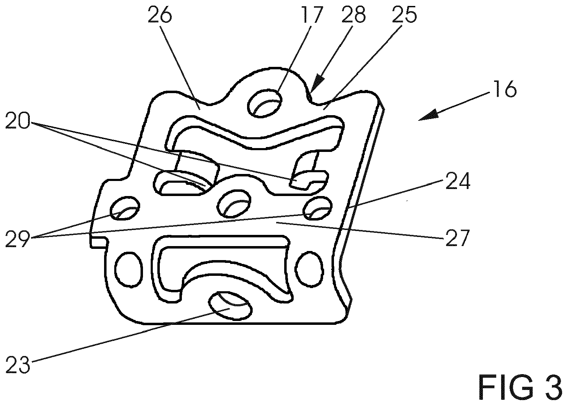

Figur 3 zeigt stark vergrößert das Verbindungsstück 16 in einer perspektivischen Darstellung mit der Aufnahme 17 für den Führungsbolzen 18, den Abwinklungen 20 der Führung und einem Anschluss 23 des Schaftes 15 des Ventilkörpers 8. Das Verbindungsstück 16 hat eine Führungsplatte 24 mit zwei federnden Abschnitten 25, 26 und einen biegesteifen Abschnitt 27. Die federnden Abschnitte 25, 26 stehen an einander gegenüberliegenden Enden von dem biegesteifen Abschnitt 27 ab und haltern mit den Enden die Aufnahme 17 für den Führungsbolzen 18. Die beiden federnden Abschnitte 25, 26 bilden ein C-förmiges Teilstück 28 der Führungsplatte 24. Die Abwinklungen 20 bilden mit der Aufnahme 17 in einer Draufsicht auf die Führungsplatte 24 ein im Wesentlichen gleichschenkliges Dreieck. Weiterhin zeigt Figur 3, dass Schraubbohrungen 29 zur Verschraubung des in Figur 2 dargestellten Magneten 2 auf dem biegesteifen Abschnitt 27 der Führungsplatte 24 angeordnet sind und damit mit dem Ventilkörper 8 aus Figur 1 mitbewegt werden.

## Patentansprüche

1. Verbindungsstück (16) zur Übertragung einer Rotationsbewegung in eine Linearbewegung mit einer verschieblich geführten Führungsplatte (24), mit einer Aufnahme (17) für einen von einer Kurvenscheibe (14) angetriebenen Führungsbolzen (18) und mit einem federnden Abschnitt (25, 26) der Führungsplatte (24) an der Aufnahme (17),
**dadurch gekennzeichnet, dass** die Führungsplatte (24) zwei, mit ihren Enden einander zugewandte federnde Abschnitte (25, 26) hat und dass die Aufnahme (17) von den Enden der beiden Abschnitte (25, 26) gehalten ist.

2. Verbindungsstück nach Anspruch 1, d a **durch gekennzeichnet**, dass die Aufnahme (17) mittig auf einem balkenförmigen Teilstück (28) angeordnet ist und dass die Enden des Teilstücks (28) an den übrigen Bereichen der Führungsplatte (24) angebunden sind.

3. Verbindungsstück nach Anspruch 2, d a **durch gekennzeichnet**, dass das Teilstück (28) C-förmig gestaltet ist.

4. Abgassteuerventil (6) zur Steuerung eines Abgaskanals (7) eines Kraftfahrzeuges mit einem Verbindungsstück (16) nach einem der vorhergehenden Ansprüche, mit einem linear verschieblichen Ventilkörper (8) und mit einem Elektromotor (9) zum Antrieb des Ventilkörpers (8), wobei das Verbindungsstück (16) zur Übertragung einer Rotationsbewegung des Elektromotors (9) in eine Linearbewegung eines Ventilkörpers (8) ausgebildet ist,
**dadurch gekennzeichnet, dass** das Verbindungsstück (16) mit dem Ventilkörper (8) und der Elektromotor (9) zum Antrieb mit der Kurvenscheibe (14) verbunden ist.

5. Abgassteuerventil mit einem Verbindungsstück nach Anspruch 4, **dadurch gekennzeichnet, dass** die Kurvenscheibe (14) einen hervorstehenden Rand (19) hat und dass der Führungsbolzen (18) an dem hervorstehenden Rand (19) abgestützt ist.

6. Abgassteuerventil mit einem Verbindungsstück nach zumindest einem der Ansprüche 4 bis 5, d a **durch gekennzeichnet**, dass die Führungsplatte (24) von dem Führungsbolzen (18) beabstandet eine Führung in der Kurvenscheibe (14) hat.

7. Abgassteuerventil mit einem Verbindungsstück nach Anspruch 6, **dadurch gekennzeichnet, dass** die Führung eine Abwinklung (20) von der Führungsplatte (24) hat, dass der von der Kurvenscheibe (14) hervorstehende Rand (19) an jeder Stelle im Wesentlichen die gleiche Stärke hat, und dass die Abwinklung (20) an der dem Führungsbolzen (18) abgewandten Seite des Randes (19) geführt ist.

8. Abgassteuerventil mit einem Verbindungsstück nach Anspruch 6 oder 7, **dadurch gekennzeichnet , dass** die Führung zwei einander gegenüberstehende Abwinklungen (20) hat und dass die Abwinklungen (20) mit dem Führungsbolzen (18) in einer Draufsicht auf die Kurvenscheibe (14) ein Dreieck bilden.

9. Abgassteuerventil mit einem Verbindungsstück nach zumindest einem der Ansprüche 4 bis 8, d a **durch gekennzeichnet** , dass die Führungsplatte (24) einen biegesteifen Abschnitt (27) hat und dass ein Sensor (11) zur Erfassung der Linearbewegung an dem biegesteifen Abschnitt (27) angeordnet ist.

10. Abgassteuerventil mit einem Verbindungsstück nach Anspruch 9, **dadurch gekennzeichnet, dass** die Abwinklung (20) der Führung auf dem biegesteifen Abschnitt (27) angeordnet ist.

## Claims

1. Connecting piece (16) for translating a rotational movement into a linear movement, comprising a displaceably guided guide plate (24), comprising a receptacle (17) for a guide pin (18) which is driven by a cam disc (14), and comprising a resilient section (25, 26) of the guide plate (24) at the receptacle (17), **characterized in that** the guide plate (24) has two resilient sections (25, 26) which face one another by way of their ends, and **in that** the receptacle (17) is held by the ends of the two sections (25, 26).

2. Connecting piece according to Claim 1, **characterized in that** the receptacle (17) is arranged centrally on a beam-like portion (28), and **in that** the ends of the portion (28) are connected to the other regions of the guide plate (24).

3. Connecting piece according to Claim 2, **characterized in that** the portion (28) is of C-shaped configuration.

4. Exhaust gas control valve (6) for controlling an exhaust gas duct (7) of a motor vehicle, comprising a connecting piece (16) according to one of the preceding claims, comprising a linearly displaceable valve body (8) and comprising an electric motor (9) for driving the valve body (8), wherein the connecting piece (16) is designed for translating a rotational movement of the electric motor (9) into a linear movement of a valve body (8), **characterized in that** the connecting piece (16) is connected to the valve body (8), and the electric motor (9) is connected to the cam disc (14) for driving purposes.

5. Exhaust gas control valve comprising a connecting piece according to Claim 4, **characterized in that** the cam disc (14) has a protruding edge (19), and **in that** the guide pin (18) is supported on the protruding edge (19).

6. Exhaust gas control valve comprising a connecting piece according to at least one of Claims 4 to 5, **characterized in that** the guide plate (24) has a guide in the cam disc (14) at a distance from the guide pin (18) .

7. Exhaust gas control valve comprising a connecting piece according to Claim 6, **characterized in that** the guide has an angled portion (20) of the guide plate (24), **in that** that edge (19) which protrudes from the cam disc (14) has substantially the same thickness at each point, and **in that** the angled portion (20) is guided on that side of the edge (19) which is averted from the guide pin (18) .

8. Exhaust gas control valve comprising a connecting piece according to Claim 6 or 7, **characterized in that** the guide has two angled portions (20) which are positioned opposite one another, and **in that** the angled portions (20) form a triangle with the guide pin (18) in a plan view of the cam disc (14).

9. Exhaust gas control valve comprising a connecting piece according to at least one of Claims 4 to 8, **characterized in that** the guide plate (24) has a flexurally rigid section (27), and **in that** a sensor (11) for detecting the linear movement is arranged on the flexurally rigid section (27).

10. Exhaust gas control valve comprising a connecting piece according to Claim 9, **characterized in that** the angled portion (20) of the guide is arranged on the flexurally rigid section (27).

## Revendications

1. Pièce de raccordement (16) pour le transfert d'un mouvement de rotation en un mouvement linéaire, munie d'une plaque de guidage guidée de manière coulissante (24), munie d'un logement (17) pour un boulon de guidage (18) entraîné par un disque à came (14) et munie d'une section élastique (25, 26) de la plaque de guidage (24) au niveau du logement (17), **caractérisée en ce que** la plaque de guidage (24) a deux sections élastiques (25, 26) avec leurs extrémités tournées l'une vers l'autre, et **en ce que** le logement (17) est maintenu par les extrémités des deux sections (25, 26).

2. Pièce de raccordement selon la revendication 1, **caractérisée en ce que** le logement (17) est agencé au milieu sur une pièce partielle en forme de barre (28), et **en ce que** les extrémités de la pièce partielle (28) sont reliées aux zones restantes de la plaque de guidage (24).

3. Pièce de raccordement selon la revendication 2, **caractérisée en ce que** la pièce partielle (28) est configurée en forme de C.

4. Soupape de commande de gaz d'échappement (6) pour la commande d'un canal de gaz d'échappement (7) d'un véhicule automobile, munie d'une pièce de raccordement (16) selon l'une quelconque des revendications précédentes, munie d'un corps de soupape coulissant linéairement (8) et munie d'un moteur électrique (9) pour l'entraînement du corps de soupape (8), la pièce de raccordement (16) étant configurée pour le transfert d'un mouvement de rotation du moteur électrique (9) en un mouvement linéaire d'un corps de soupape (8), **caractérisée en ce que** la pièce de raccordement (16) est reliée avec le corps de soupape (8) et le moteur électrique (9) pour l'entraînement avec le disque à came (14).

5. Soupape de commande de gaz d'échappement munie d'une pièce de raccordement selon la revendication 4, **caractérisée en ce que** le disque à came (14) a un bord en saillie (19) et **en ce que** le boulon de guidage (18) est soutenu sur le bord en saillie (19).

6. Soupape de commande de gaz d'échappement munie d'une pièce de raccordement selon au moins l'une quelconque des revendications 4 à 5, **caractérisée en ce que** la plaque de guidage (24) a un guide dans le disque à came (14) à distance du boulon de guidage (18).

7. Soupape de commande de gaz d'échappement munie d'une pièce de raccordement selon la revendication 6, **caractérisée en ce que** le guide a un coude (20) à partir de la plaque de guidage (24), **en ce que** le bord en saillie (19) à partir du disque à came (14) a essentiellement la même épaisseur à tout emplacement, et **en ce que** le coude (20) est guidé sur le côté du bord (19) détourné du boulon de guidage (18).

8. Soupape de commande de gaz d'échappement munie d'une pièce de raccordement selon la revendication 6 ou 7, **caractérisée en ce que** le guide a deux coudes (20) en vis-à-vis et **en ce que** les coudes (20) forment avec le boulon de guidage (18) en vue de dessus un triangle sur le disque à came (14).

9. Soupape de commande de gaz d'échappement munie d'une pièce de raccordement selon au moins l'une quelconque des revendications 4 à 8, **caractérisée en ce que** la plaque de guidage (24) a une section rigide en flexion (27) et **en ce qu'**un capteur (11) pour la détection du mouvement linéaire est agencé sur la section rigide en flexion (27).

10. Soupape de commande de gaz d'échappement munie d'une pièce de raccordement selon la revendication 9, **caractérisée en ce que** le coude (20) du guide est agencé sur la section rigide en flexion (27).
